# FASCICULE DE BREVET EUROPEEN

(11) **EP 1 334 003 B1**
(45) Date de publication et mention de la délivrance du brevet: **29.03.2006**
(21) Numéro de dépôt: 01983667.5
(22) Date de dépôt: 31.10.2001
(51) Int. Cl.: B60N 2/10, B60N 2/14

(54) **SIEGE AVANT POUR VEHICULE AUTOMOBILE**
FRONTSITZ FÜR KRAFTFAHRZEUG
MOTOR VEHICLE FRONT SEAT

(30) Priorité: 15.11.2000 FR 0014730
(43) Date de publication de la demande: 13.08.2003
(73) Titulaire: Peugeot Citroen Automobiles, 92200 Neuilly Sur Seine (FR)
(72) Inventeur: MICHEL, Serge, F-78840 Freneuse (FR)
(74) Mandataire: De Cuenca, Emmanuel Jaime
(86) Numéro de dépôt international: PCT/FR2001/003386
(87) Numéro de publication internationale: WO 2002/040311

(56) Documents cités:
- EP-A- 0 546 896
- EP-A- 0 626 288
- GB-A- 293 620
- US-A- 3 724 896
- PATENT ABSTRACTS OF JAPAN vol. 1996, no. 12, 26 décembre 1996 (1996-12-26) -& JP 08 207627 A (J R NISHI NIPPON TECHNOS:KK), 13 août 1996 (1996-08-13)

## Description

La présente invention concerne un siège comportant un dossier, un coussin, une poignée pivotante montée sur un des côtés latéraux du dossier et adaptée pour faire basculer le dossier sur le coussin à partir d'une position relevée, un plateau tournant fixé sous le coussin et une manette pivotante fixée au plateau tournant et adaptée pour provoquer une rotation du coussin sur lui-même avec le dossier en position relevée, suivant le préambule de la revendication indépendante 1 et connu en soi dans l'art.

Elle se rapporte plus particulièrement à un siège de ce type monté en tant que siège avant d'un véhicule automobile.

De' manière usuelle, le conducteur ou passager d'un véhicule automobile éprouve d'autant plus de difficultés à pénétrer dans l'habitacle que celui-ci présente un volume et/ou une accessibilité restreint(s). Ainsi, il n'est pas aisé pour un passager d'accéder aux places arrières d'un « petit » véhicule qui comporte uniquement deux portes battantes ou coulissantes à l'avant du véhicule, et ce malgré le fait qu'il puisse faire basculer le dossier sur l'assise du siège avant concerné.

Sur certains types de véhicule équipés de siège avant tournant sur eux-mêmes, il est cependant possible d'améliorer l'accessibilité aux places arrières mais au prix de manipulations compliquées. En effet, le passager doit faire pivoter avec une main la poignée montée sur le côté latéral extérieur du dossier afin de faire basculer celui-ci sur le coussin et, tout en se baissant, il doit simultanément faire pivoter avec l'autre main la manette placée sous le coussin afin de faire pivoter sur lui-même le coussin en l'orientant vers l'extérieur du véhicule.

Des sièges tournants de ce genre, mais dépourvus de poignée ou manette, sont connus, par exemple, de EP-A-0 626 288 ou GB-A-293 620.

Le but de l'invention est alors de proposer un siège du type mentionné ci-dessus qui permette au passager d'avoir une grande accessibilité aux places arrières d'un véhicule automobile tout en étant simple à manipuler.

Pour ce faire, l'invention telle que définie dans la revendication indépendante 1 a pour objet un siège, notamment pour véhicule automobile, comportant un dossier, un coussin, une poignée pivotante montée sur un des côtés latéraux du dossier et adaptée pour faire basculer le dossier sur le coussin à partir d'une position relevée, un plateau tournant fixé en dessous du coussin et une manette pivotante fixée au plateau tournant et adaptée pour provoquer une rotation du coussin autour de l'axe de rotation du plateau tournant avec le dossier en position relevée, caractérisé en ce qu'il comprend des moyens pour faire pivoter la manette pivotante immédiatement après le pivotement de la poignée de manière à obtenir une rotation du coussin autour de l'axe de rotation du plateau tournant immédiatement après le basculement du dossier sur le coussin.

Le siège peut également comporter une ou plusieurs caractéristiques suivantes prises isolément ou en combinaison :
- les moyens sont constitués d'un câble dont une des extrémités est fixée à la partie arrière du dossier et l'autre est fixée à la manette pivotante ;
- le câble est logé dans une gaine ;
- le siège comporte des tubes fixés à la partie inférieure du plateau tournant, qui s'étendent transversalement à celui-ci, les extrémités de ces tubes étant adaptées pour être fixés à un plancher, tel qu'un plancher de véhicule automobile ;
- l'axe de rotation du plateau tournant est décalé par rapport à l'axe du coussin.

L'invention concerne également un véhicule automobile équipé d'au moins, un siège précédemment décrit, de préférence montée en tant que siège avant.

D'autres avantages et caractéristiques de l'invention seront mieux comprises à la lecture de la description détaillée d'un exemple de réalisation faite en référence aux figures 1 à 4 qui représentent respectivement :
- figure 1 : une vue schématique de côté d'un siège avant de véhicule automobile conforme à l'invention ;
- figures 2a et 2b : deux vues détaillées de côté d'une partie du dossier selon l'invention respectivement en position relevée et en position intermédiaire de basculement du dossier vers le coussin ;
- figure 3 : une vue détaillée de dessus du plateau tournant selon l'invention ;
- figure 4 : une vue de dessus du siège conforme selon l'invention le dossier étant en position intermédiaire basculée sur le coussin, ce dernier ayant tourné sur lui-même d'un angle de 45° par rapport à la position fixe de conduite.

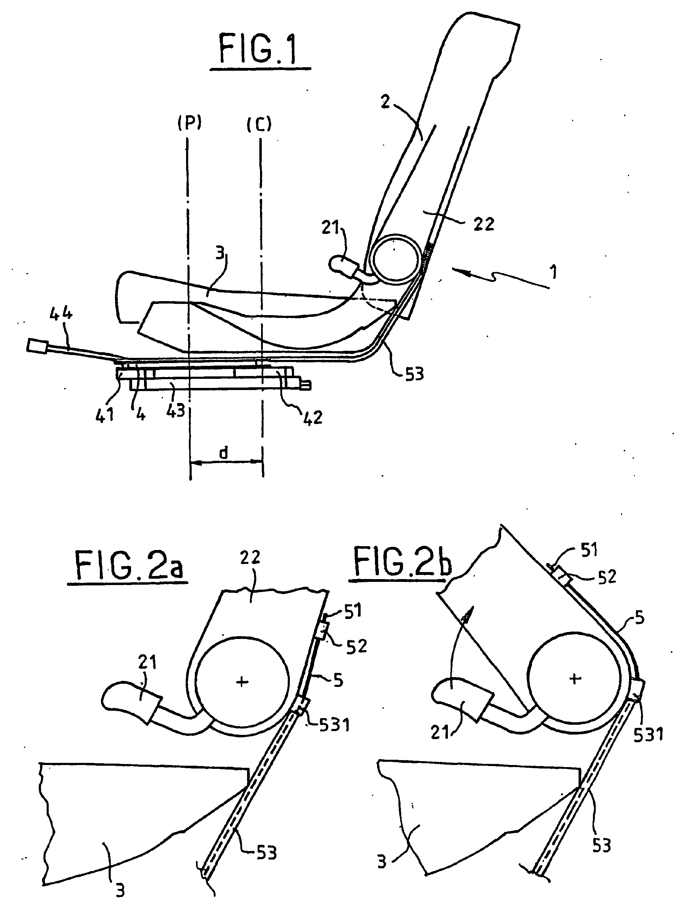

La figure 1 représente un siège avant de véhicule automobile dont l'accès aux places arrières est très limité lorsque le dossier 2 est en position relevée, c'est-à-dire sensiblement vertical au coussin 3, et lorsque ce dernier est en position de conduite c'est-à-dire fixe et sensiblement parallèle au côté latéral de la caisse du véhicule non représenté.

Ce siège avant 1 comprend de manière connue en soi une poignée 21 montée pivotante sur le côté latéral 22 du dossier 2 le plus proche de la porte avant non représentée lorsque le coussin est en position de conduite.

Il comporte également un plateau tournant 4 fixé en dessous du coussin 3 et dont l'axe de rotation (P) est décalé de l'axe (C) d'une distance d suffisamment importante pour accroître l'espace de vie intérieur lorsque le dossier 2 fait face aux places arrières du véhicule et suffisamment faible pour que le dossier en position relevée ne vienne pas en contact des autres éléments du véhicule lorsque le coussin tourne, tels que le montant latéral de la carrosserie correspondant ou la planche de bord...

Le plateau tournant 4 comporte, quant à lui, dans sa partie inférieure deux tubes 41,42 fixés au moyen de vis non, représentées et qui s'étendent transversalement au plateau le long deux de ses côtés. Les extrémités de ces tubes 410,420 viennent se fixer sur deux longerons 43 également au moyen de vis non représentées. Les longerons 43 sont quant à eux fixés directement au plancher d'un véhicule automobile également au moyen de vis.

Une manette pivotante 44 est enserrée dans une patte recourbée flexible 45 disposée à l'avant du plateau tournant 4. La rotation de cette manette 44 vers le coussin provoque de manière connue en soi une rotation du coussin 3 autour de l'axe de rotation du plateau tournant (P) avec le dossier 2 en position relevée.

Le siège 1 selon l'invention comprend enfin un câble 5 dont une des extrémités 51 est fixée dans une bride de fixation 52. Cette fixation de l'extrémité 51 du câble 5 dans la bride 52 peut être réalisée par tout moyen à la portée de l'homme de l'art. Il peut s'agir par exemple d'une vis traversant la bride qui vient écraser l'extrémité 51 du câble 5 à l'intérieur de l'évidement pratiqué dans la bride 52 dans lequel il est logé. La bride 52 est elle-même fixée à la partie arrière du dossier 2 par soudage. Le câble 5 est disposé dans une gaine protectrice 53 qui permet de ne pas dégrader l'enveloppe du siège 1 et qui présente un arrêt 531 en butée contre l'arrière du dossier 2. L'autre extrémité 54 est quant à elle fixée dans une bride de fixation 55 soudée à la manette pivotante 44 à l'extrémité opposée 441 de celle 442 sur laquelle le pommeau de manoeuvre 443 est placé. Toute la partie centrale du câble 5 est quant à elle disposée le long du siège 1 en dessous du coussin 3 et le long de la partie supérieure du plateau tournant 4, la gaine protectrice 53 étant fixée à ce dernier au moyen d'attaches connues en soi et non représentées.

La longueur du câble 5 est judicieusement choisie de manière à ne pas gêner la rotation complète du coussin 3 autour de l'axe de rotation du plateau tournant 4, c'est à dire de l'ordre de 180°. Cette rotation correspond à une orientation du siège avant telle que le dossier 2 fait face aux places arrières du véhicule, l'arrière du dossier étant en regard de la planche de bord du véhicule.

Le fonctionnement du siège 1 avant selon l'invention va maintenant être expliqué.

Lorsqu'un passager désire accéder aux places arrières du véhicule, il vient manoeuvrer la poignée 21 en la faisant pivoter sur son axe de manière à faire basculer le dossier 2 sur le coussin 3 du siège avant 1 non occupé et le faire passer de sa position relevée (figure 2a) à une position inclinée (figure 2b). Ce basculement du dossier 2 sur le coussin 3 provoque la tension du câble 5 selon la flèche f à son extrémité 51 solidaire du dossier 2. Cette tension du câble 5 est suffisante pour provoquer immédiatement après le pivotement de la manette 44. La rotation du coussin 3 autour de l'axe de rotation du plateau tournant 4 est ainsi obtenue immédiatement après le basculement du dossier 2 sur le coussin 3.

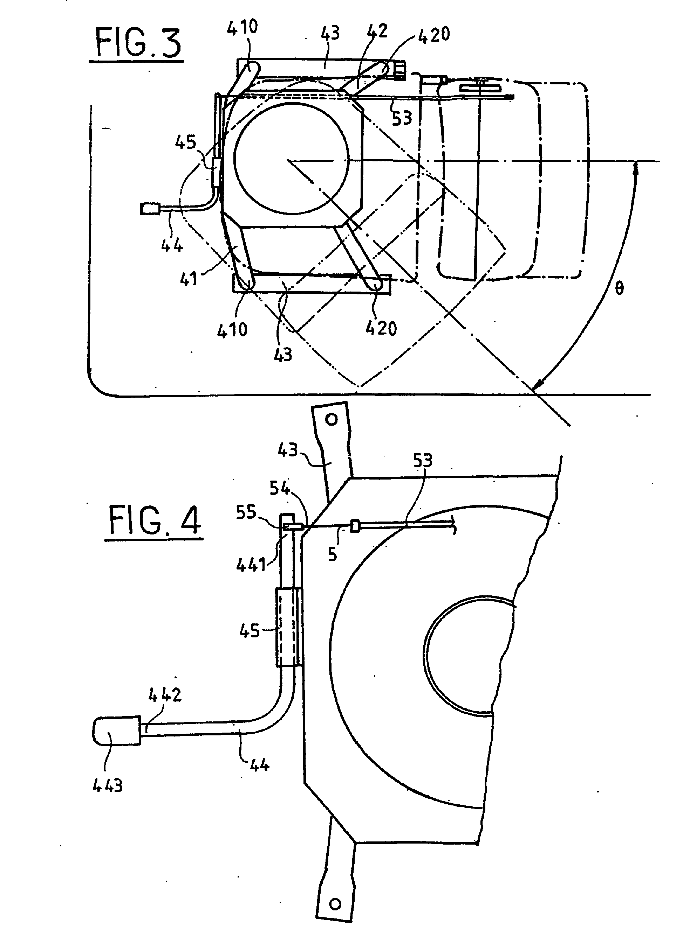

Le passager peut alors sans aucune difficulté manoeuvrer le siège 1 avec le dossier 2 rabattu et l'orienter aisément vers l'extérieur par exemple avec un angle de rotation θ compris entre 45 et 135° (l'angle de rotation est ici l'angle mesuré depuis la position du siège 1 initiale c'est à dire fixe et l'arrière du dossier étant en regard des places arrières) tel que représenté à la figure 3.

L'accessibilité aux places arrières est ainsi grandement améliorée puisque le passager peut orienter à souhait le siège avant 1 au cours de sa montée dans le véhicule avec le dossier 2 rabattu sans qu'il ait à manipuler d'autres organes.

Le mode de réalisation qui vient d'être décrit est très avantageux dans la mesure où il permet d'obtenir la cinématique désirée en ajoutant un minimum de pièces qui ne modifient pas la structure du siège. Le surcoût engendré par la mise en place du câble selon l'invention est donc très faible.

Il va de soi bien entendu que différents modes de réalisation d'un tel siège peuvent être envisagés sans pour autant sortir du cadre de l'invention, qui permet une grande accessibilité aux places arrières d'un véhicules tout en restant très simple à manipuler.

Ainsi, il est possible d'envisager un mécanisme qui autorise le coulissement du plateau tournant sur des glissières disposées longitudinalement au véhicule immédiatement après que le dossier ait basculé sur le coussin du siège.

## Revendications

1. Siège (1), notamment pour véhicule automobile, comportant un dossier (2), un coussin (3), une poignée pivotante (21) montée sur un des côtés latéraux (22) du dossier et adaptée pour faire basculer le dossier sur le coussin à partir d'une position relevée, un plateau tournant (4) fixé en dessous du coussin et une manette pivotante (44) fixée au plateau tournant et adaptée pour provoquer une rotation du siège autour de l'axe de rotation du plateau tournant (P) avec le dossier en position relevée, **caractérisé en ce qu'**il comprend des moyens (5, 52, 55) reliant le dossier (2) à la manette pivotante (44) pour faire pivoter la manette pivotante immédiatement après le pivotement de la poignée et le basculement du dossier sur le coussin (3) de manière à obtenir une rotation du siège autour de l'axe de rotation du plateau tournant immédiatement après le basculement du dossier sur le coussin.

2. Siège selon la revendication 1, **caractérisé en ce que** les moyens sont constitués d'un câble (5) dont une des extrémités (51) est fixée à la partie arrière du dossier et l'autre (54) est fixée à la manette pivotante.

3. Siège selon la revendication 1 ou 2, **caractérisé en ce que** le câble est logé dans une gaine (53).

4. Siège selon l'une des revendications précédentes, **caractérisé en ce qu'**il comporte des tubes (41,42) fixés à la partie inférieure du plateau tournant, qui s'étendent transversalement à celui-ci, les extrémités de ces tubes étant adaptées pour être fixées à un plancher, tel qu'un plancher de véhicule automobile.

5. Siège selon l'une des revendications précédentes, **caractérisé en ce que** l'axe de rotation du plateau tournant (P) est décalé par rapport à l'axe (C) du coussin.

6. Véhicule automobile équipé d'au moins un siège selon l'une des revendications précédentes, de préférence monté en tant que siège avant.

## Patentansprüche

1. Sitz (1) insbesondere für ein Kraftfahrzeug, mit einer Rückenlehne (2), einem Sitzkissen (3), einem an einer der Seiten (22) der Rückenlehne montierten drehbaren Griff (21) zum Kippen der Rückenlehne ausgehend von einer hochgeklappten Position auf das Sitzkissen, einem Drehteller (4), der unterhalb des Sitzkissens befestigt ist, und einem drehbaren Hebel (44), der am Drehteller befestigt ist und bei hochgeklappter Rückenlehne eine Drehung des Sitzes um die Drehachse (P) des Drehtellers bewirken kann, **dadurch gekennzeichnet, dass** er Mittel (5, 52, 55) aufweist, welche die Rückenlehne (2) mit dem drehbaren Hebel (44) verbinden, um diesen direkt nach dem Drehen des Griffs und dem Kippen der Rückenlehne auf das Sitzkissen (3) zu drehen, sodass direkt nach dem Kippen der Rückenlehne auf das Sitzkissen eine Drehung des Sitzes um die Drehachse des Drehtellers erhalten wird.

2. Sitz nach Anspruch 1, **dadurch gekennzeichnet, dass** die Mittel aus einem Seil (5) bestehen, dessen eines Ende (51) am hinteren Abschnitt der Rückenlehne und dessen anderes Ende (54) am drehbaren Hebel befestigt ist.

3. Sitz nach Anspruch 1 oder 2, **dadurch gekennzeichnet, dass** sich das Seil in einer Hülle (53) befindet.

4. Sitz nach einem der vorhergehenden Ansprüche, **dadurch gekennzeichnet, dass** er Rohre (41, 42) aufweist, die am unteren Abschnitt des Drehtellers befestigt sind und sich quer zu diesem erstrecken, wobei die Enden der Rohre an einem Boden, beispielsweise am Boden eines Kraftfahrzeugs, befestigt werden können.

5. Sitz nach einem der vorhergehenden Ansprüche, **dadurch gekennzeichnet, dass** die Drehachse (P) des Drehtellers gegenüber der Achse (C) des Sitzkissens versetzt ist.

6. Kraftfahrzeug mit mindestens einem Sitz nach einem der vorhergehenden Ansprüche, der vorzugsweise als Vordersitz montiert ist.

## Claims

1. Seat (1), particularly for a motor vehicle, comprising a seat back (2), a cushion (3), a pivoting lever (21) mounted on one of the lateral sides (22) of the seat back and adapted so as to cause the seat back to tilt over the cushion from a raised position, a rotary plate (4) fixed under the cushion, and a pivoting lever (44) fixed to the rotary plate and adapted so as to cause the cushion to rotate about the axis of rotation of the rotary plate (P) with the seat back in the raised position, **characterised in that** it comprises means (5, 52, 55) connecting the seat back (2) to the pivoting lever (44) in order to cause the pivoting lever to rotate immediately after the pivoting of the handle and the tilting of the seat back over the cushion (3) so as to obtain a rotation of the seat about the axis of rotation of the rotary plate immediately after the seat back has been tilted over the cushion.

2. Seat according to Claim 1, **characterised in that** the means are constituted by a cable (5), one of the ends (51) of which is fixed to the rear part of the seat back, the other end (54) being fixed to the pivoting lever.

3. Seat according to Claim 1 or 2, **characterised in that** the cable is housed in a sheath (53).

4. Seat according to one of the preceding claims, **characterised in that** the seat comprises tubes (41, 42) fixed to the lower part of the rotary plate, which tubes extend transversely to said rotary plate, the ends of these tubes being adapted so as to be fixed to a floor such as a motor vehicle floor.

5. Seat according to one of the preceding claims, **characterised in that** the axis of rotation of the rotary plate (P) is offset relative to the axis (C) of the cushion.

6. Motor vehicle fitted with at least one seat according to one of the preceding claims, preferably mounted as a front seat.
